# FASCICULE DE BREVET EUROPEEN

(11) **EP 2 288 477 B1**
(45) Date de publication et mention de la délivrance du brevet: **05.10.2011**
(21) Numéro de dépôt: 09730983.5
(22) Date de dépôt: 06.04.2009
(51) Int. Cl.: B25J 17/02

(54) **ARTICULATION MOTORISEE A DEUX LIAISONS PIVOTS ET ROBOT HUMANOIDE METTANT EN OEUVRE L'ARTICULATION**
MOTORISIERTES GELENK MIT ZWEI DREHVERBINDUNGEN UND DAS GELENK EINSETZENDER HUMANOIDROBOTER
MOTORIZED ARTICULATION WITH TWO PIVOT JOINTS, AND HUMANOID ROBOT EMPLOYING THE ARTICULATION

(30) Priorité: 09.04.2008 FR 0801953
(43) Date de publication de la demande: 02.03.2011
(73) Titulaire: Aldebaran Robotics, 75014 Paris (FR)
(72) Inventeur: MAISONNIER, Bruno, F-75005 Paris (FR); LAFOURCADE, Pascal, Alain, F-31400 Toulouse (FR); FISCHESSER, Romain, Mathieu, Pascal, F-93100 Montreuil (FR)
(74) Mandataire: Collet, Alain
(86) Numéro de dépôt international: PCT/EP2009/054082
(87) Numéro de publication internationale: WO 2009/124904

(56) Documents cités:
- EP-A- 1 207 024
- US-A- 5 967 580

## Description

L'invention concerne une articulation motorisée à deux liaisons pivots et un robot humanoïde mettant en oeuvre l'articulation. Plus particulièrement, l'invention concerne une articulation selon le préambule de la revendication 1. Une telle articulation est connue du document EP-A-1207024. L'invention trouve une utilité particulière dans la réalisation de robots humanoïdes dont on cherche à améliorer l'ergonomie.

De tels robots sont équipés de nombreuses articulations permettant de mouvoir différentes parties du corps du robot telles que la tête ou les membres. Certaines articulations du corps humain telles que l'épaule, le coude ou le cou peuvent être reproduites dans un robot au moyen d'une articulation comprenant deux liaisons pivots encore appelée liaison pivot double. Plus précisément, la sortie de la première liaison pivot forme l'entrée de la seconde liaison pivot. Par exemple, au niveau du coude, l'avant bras est articulé par rapport au bras de façon à permettre une première rotation de l'avant bras autour d'un axe selon lequel l'avant bras s'étend ainsi qu'une seconde rotation autour d'un axe orthogonal au premier axe. Autrement dit, l'avant bras possède deux degrés de libertés en rotation par rapport au bras.

Dans un robot, les articulations sont motorisées par exemple au moyen de moteurs électriques rotatifs permettant de contrôler chacun un degré de liberté en rotation. Dans une articulation à deux axes orthogonaux telle que décrit plus haut, il est donc nécessaire de disposer de deux moteurs, contrôlant chacun une rotation. Pour réaliser cette articulation, on peut aligner les moteurs avec les axes de rotation respectifs tel que par exemple décrit dans les documents EP-A-1 207 024 et US-A-5 967 580. Cette disposition est simple à mettre en oeuvre mais, dans le cas du coude par exemple, un des moteurs est obligatoirement proéminent par rapport à l'articulation. Cette excroissance gène certains mouvements du robot.

De plus, pour que le robot puisse placer les bras le long de son corps, les excroissances formées par les moteurs au niveau des coudes doivent s'étendre vers l'extérieur du corps. Les excroissances sont placées de façon symétrique par rapport à un axe vertical formant la colonne vertébrale du robot. Cette disposition impose que les articulations soient également symétriques. Les articulations ne peuvent être identiques réduisant ainsi la standardisation des pièces mécaniques constituant le robot.

L'invention a pour but de pallier tout ou partie de ces problèmes en supprimant l'excroissance due au moteur. De façon générale, l'invention permet d'améliorer la compacité d'articulations comprenant deux liaisons pivots.

A cet effet, l'invention a pour objet une articulation selon la revendication 1.

L'invention a également pour objet, un robot humanoïde comprenant au moins une articulation selon l'invention.

L'invention sera mieux comprise et d'autres avantages apparaîtront à la lecture de la description détaillée de plusieurs modes de réalisation donnés à titre d'exemple, description illustrée par le dessin joint dans lequel :
la figure 1 représente une articulation formant un coude d'un robot humanoïde ;
la figure 2 représente un schéma cinématique d'un mode de réalisation non revendiqué ;
la figure 3 représente un exemple de réalisation de pièces principales de l'articulation schématisée sur la figure 2 ;
la figure 4 représente un schéma cinématique d'un mode de réalisation de l'invention ;
la figure 5 représente un exemple de réalisation de pièces principales de l'articulation schématisée sur la figure 4 ;
la figure 6 représente une variante de l'articulation du mode de réalisation de l'invention assemblée dans son environnement et dont un réducteur comprend un train épicycloïdal.

Par souci de clarté, les mêmes éléments porteront les mêmes repères dans les différentes figures.

L'invention est décrite en rapport à un coude d'un robot humanoïde. L'invention n'est pas limitée à ce coude et il est bien entendu possible de la mettre en oeuvre pour toute articulation motorisée à double liaison pivot, notamment pour d'autres articulations d'un robot humanoïde telles que le cou ou les épaules.

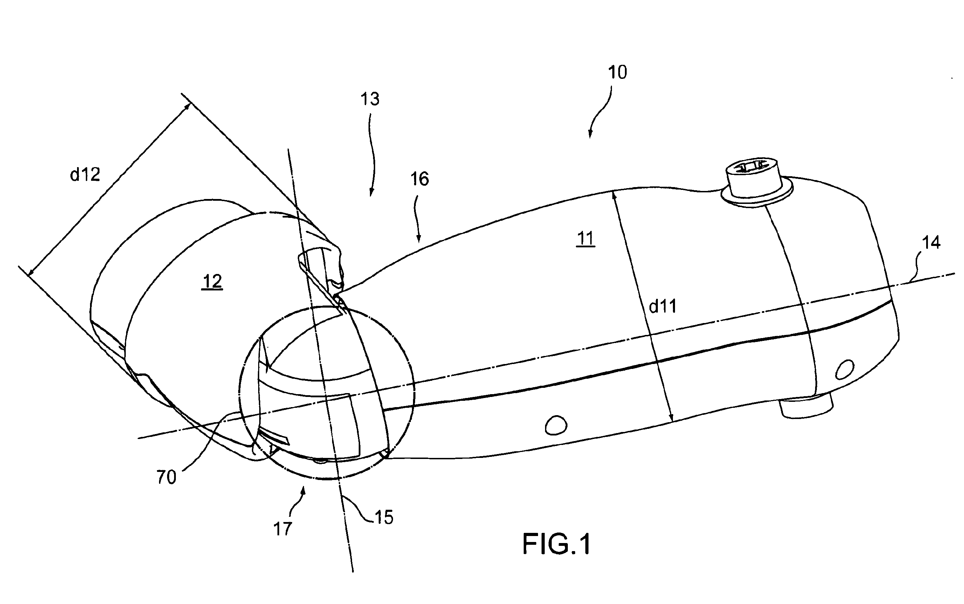

La figure 1 représente une partie d'un membre supérieur 10 d'un robot humanoïde. Le membre supérieur 10 comprend un bras 11 et un avant bras 12. Une articulation 13 permet à l'avant bras 12 de se mouvoir par rapport au bras 11 selon deux axes de rotation. Un premier axe 14 s'étend selon une direction principale de l'avant bras 11 et un second axe 15 est orthogonal à l'axe 14. L'articulation 13 comprend deux liaisons pivots 16 et 17. La liaison pivot 16 permet la rotation de l'avant bras 12 autour de l'axe 14 et la liaison pivot 17 permet la rotation de l'avant bras 12 autour de l'axe 15. Sur la figure 1, les liaisons pivots 16 et 17 sont en partie cachées par un capotage du bras 11 et de l'avant bras 12. La configuration selon laquelle les axes 14 et 15 sont orthogonaux est privilégiée. Pour mettre en oeuvre l'invention, il est bien entendu possible de réaliser une articulation dans laquelle les axes 14 et 15 ne sont pas concourants. De façon générale l'invention peut être mise en oeuvre pour des axes 14 et 15 non parallèles.

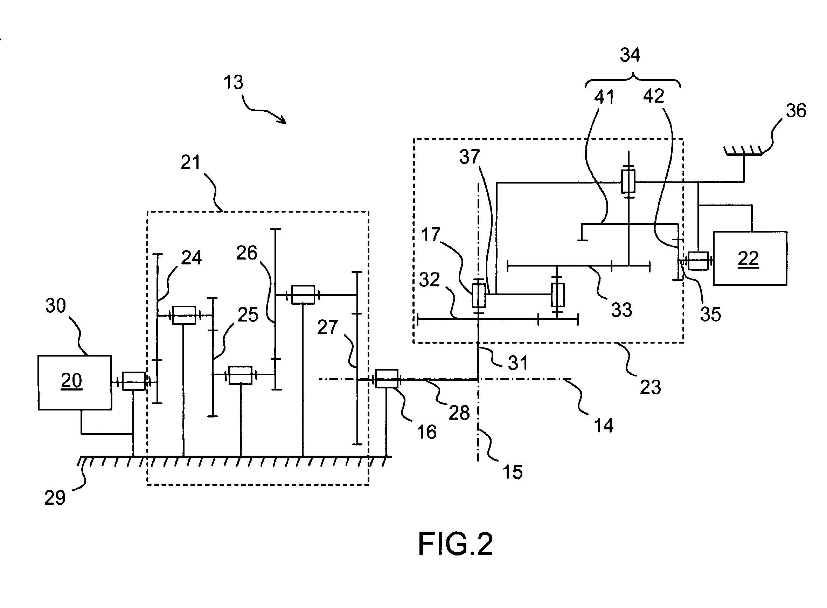

La figure 2 représente un schéma cinématique d'une
articulation 13 comprenant un premier moteur 20 entraînant la liaison pivot 16 au travers d'un premier réducteur de vitesse 21 et un second moteur 22 entraînant la liaison pivot 17 au travers d'un second réducteur de vitesse 23.

Les moteurs 20 et 22 sont rotatifs. Ils peuvent être de tout type et par exemple des moteurs électriques à courant continu.

Le réducteur de vitesse 21 est à axes parallèles. Il comprend plusieurs trains d'engrenages droits. Dans l'exemple représenté, quatre trains d'engrenages 24 à 27 se succèdent pour obtenir le rapport de réduction souhaité. Le moteur 20 entraîne le train 24 et un arbre 28 de sortie du train d'engrenages 27 forme une partie tournante de la liaison pivot 16. Une partie fixe de la liaison pivot 16 est formée par une structure porteuse 29 du bras 11. Un stator 30 du moteur 20 est également solidaire de la structure porteuse 29. La rotation du moteur 20 permet de contrôler, dans la liaison pivot 16, au travers du réducteur 21, les différents paramètres du mouvement de l'arbre 28 par rapport à la structure porteuse 29 à savoir, la position angulaire, la vitesse et le couple. Le moteur 20 contrôle donc le mouvement de l'avant bras 11 autour de l'axe 14.

L'arbre 28 de sortie du réducteur 21 est par ailleurs solidaire d'une partie mobile 31 formant un arbre de sortie du réducteur 23. L'arbre 28 s'étend suivant l'axe 14 et la partie mobile 31 suivant l'axe 15. Dans la configuration décrite, la partie mobile 31 est donc perpendiculaire à l'arbre 28. Le réducteur 23 comprend deux trains d'engrenages droits 32 et 33 ainsi qu'un train d'engrenages 34 formant un renvoi d'angle vers un arbre de sortie 35 du moteur 22. Le renvoi d'angle 34 permet d'aligner le moteur 22 avec une structure porteuse 36 de l'avant bras 12. Plus précisément, un arbre de sortie 35 du moteur 22 s'étend selon une direction longitudinale de l'avant bras 12. Le renvoi d'angle 34 permet d'éviter que le moteur 22 ne soit aligné avec l'axe 15. En effet, l'avant bras 12 s'étend sensiblement perpendiculairement à l'axe 15. Avantageusement, le renvoi d'angle 34 assure un angle sensiblement droit entre l'axe 15 de la liaison pivot 17 et l'arbre de sortie 35 du moteur 22. Une partie fixe 37 de la liaison pivot 17 est solidaire de la structure porteuse 36. La rotation du moteur 22 permet de contrôler, dans la liaison pivot 17, au travers du réducteur 23, le mouvement de la partie mobile 31 par rapport à une partie fixe 37 de la liaison pivot 17 et donc le mouvement de l'avant bras 11 autour de l'axe 15.

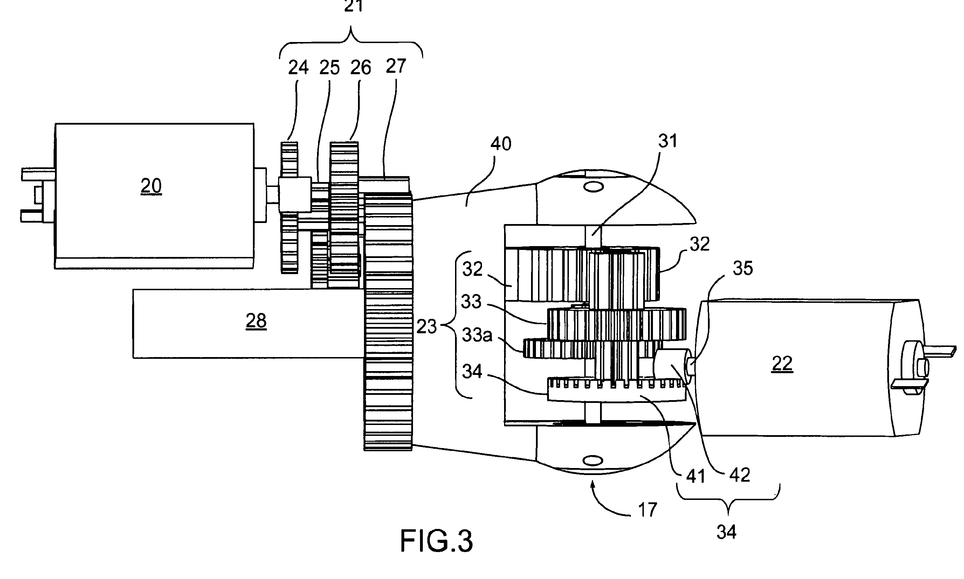

La figure 3 représente un exemple de réalisation de pièces principales de l'articulation schématisée sur la figure 2. On y retrouve le moteur 20 entraînant l'arbre 28 par l'intermédiaire du réducteur 21. Pour ne pas surcharger la figure 3, dans la liaison pivot 16, seul l'arbre 28 est représenté, l'articulation comporte également un palier non représenté et permettant la rotation ainsi que le guidage de l'arbre 28 par rapport à la structure porteuse 29. L'arbre 28 est solidaire d'une fourchette 40 dans laquelle l'arbre 31, formant la partie mobile de la liaison pivot 17, est immobilisé. Sur la figure 3 sont également représentés le moteur 22 et le réducteur 23. Sur cette figure, le réducteur comporte quatre trains d'engrenages dont le renvoi d'angle 34. Un étage supplémentaire 33a de train d'engrenages droits est ajouté par rapport au schéma cinématique de la figure 2. Le nombre de trains d'engrenages est peu important dans la mise en oeuvre de l'invention. Il dépend du rapport de réduction souhaité pour le réducteur considéré.

Le renvoi d'angle 34 comprend avantageusement un engrenage face 41 associé à un pignon 42, par exemple solidaire de l'arbre de sortie 35 du moteur 22. L'utilisation d'un engrenage face 41 présente plusieurs avantages par rapport à l'utilisation d'engrenages coniques pour assurer un renvoi d'angle. Ces derniers ont un rapport de réduction limité, sont sensibles aux défauts d'alignement de leur axes et ont un coût de fabrication plus important que l'association d'un engrenage face avec un pignon droit. L'association d'un engrenage face et d'un pignon droit permet également de supprimer les efforts axiaux générés par des engrenages coniques.

Les réducteurs de vitesse 21 et 23 peuvent avoir des rapports de réduction important de l'ordre de 150 à 200 pour permettre le contrôle précis de petits mouvements de l'avant bras 12. Il est avantageux que les réducteurs 21 et 23 soit réversibles afin de pouvoir faire bouger l'avant bras 12 à l'aide d'une action extérieure au robot sans endommager les réducteurs 21 et 23. A cet effet, on peut utiliser des engrenages réalisés à base de matière plastique, comme du polyamide, chargé de polytétrafluoroéthylène pour limiter les frottements entre les engrenages en contact. On peut également charger le matériau de base à l'aide de fibres de carbone pour améliorer les caractéristiques mécaniques des réducteurs 21 et 23.

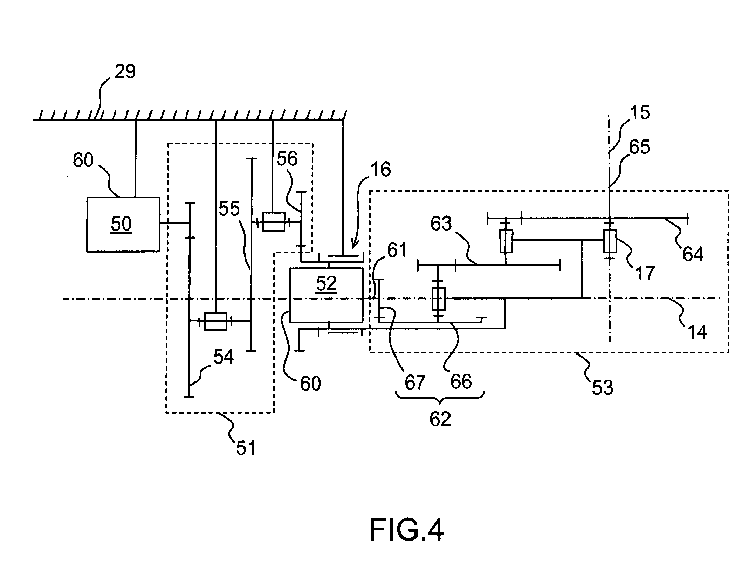

La figure 4 représente un schéma cinématique d'un mode de réalisation de l'invention. L'articulation 13 comprend un premier moteur 50 entraînant la liaison pivot 16 au travers d'un premier réducteur de vitesse 51 et un second moteur 52 entraînant la liaison pivot 17 au travers d'un second réducteur de vitesse 53.

Les moteurs 50 et 52 sont semblables aux moteurs 20 et 22. Le réducteur de vitesse 51 est à axes parallèles. Il comprend par exemple trois trains d'engrenages droits 54 à 56 successifs. Le moteur 50 entraîne le train 54 et le train d'engrenages 56 entraîne un stator 60 du moteur 52. Le stator 60 forme une partie tournante de la liaison pivot 16. Une partie fixe de la liaison pivot 16 est formée par une structure porteuse 29 du bras 11. Comme précédemment, la rotation du moteur 50 permet de contrôler, dans la liaison pivot 16, au travers du réducteur 51, la position angulaire de l'avant bras 11 autour de l'axe 14. Le stator 60 du moteur 52 est solidaire de l'axe de sortie 14 du réducteur 51.

Un arbre de sortie 61 du moteur 52 forme l'entrée du réducteur 53 comprenant un renvoi d'angle 62 suivi de deux trains d'engrenages droits 63 et 64. Un arbre de sortie 65 du train 64 forme la partie mobile de la liaison pivot 17. L'arbre de sortie 65 est solidaire de la structure porteuse 36 de l'avant bras 12. Comme précédemment, le renvoi d'angle 62 peut assurer un angle sensiblement droit entre l'axe 15 de la liaison pivot 17, selon lequel tourne le moteur 52, et l'arbre de sortie 65 du réducteur 53. La partie fixe de la liaison pivot 17 est solidaire du stator 60 du moteur 52. L'axe de rotation du moteur 52 est parallèle à l'axe de rotation du moteur 50.

Dans ce mode de réalisation, aucun des moteurs 50 et 51 ni des réducteurs 51 et 53 ne sont situés dans l'avant bras 12. Toutes les commandes électriques des moteurs 50 et 51 peuvent être disposées dans le bras 11. On peut ainsi limiter les câblages électriques transitant par l'articulation 13. Cet arrangement permet également de réduire l'inertie de l'articulation. En effet, par rapport à la structure porteuse 29 du bras, le stator 60 du moteur 52 ne tourne qu'autour de l'axe 14 de son arbre de sortie 61.

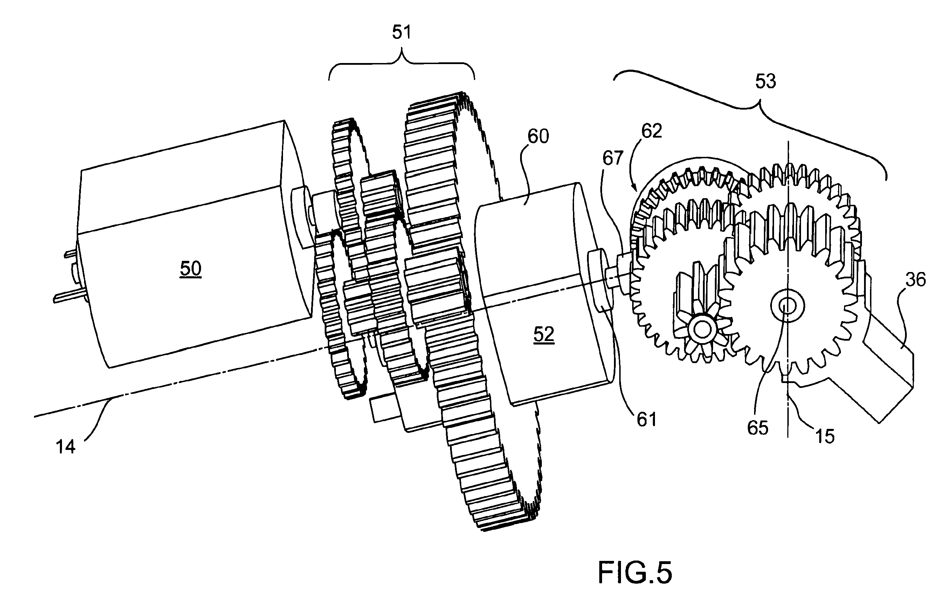

La figure 5 représente un exemple de réalisation de pièces principales de l'articulation schématisée sur la figure 4. On y retrouve le moteur 50 entraînant le stator 60 du moteur 52 par l'intermédiaire du réducteur 51 en rotation autour de l'axe 14. Le moteur 52 entraîne l'arbre 65 et la structure porteuse par l'intermédiaire du réducteur 53 en rotation autour de l'axe 15. Comme précédemment, le renvoi d'angle 62 peut comprendre un engrenage face 66 entrainé par un pignon droit 67 solidaire de l'arbre de sortie 61 du moteur 52.

Les réducteurs 21, 23, 51 et 53 comprennent chacun plusieurs trains d'engrenages droits qu'il est possible de remplacer dans chaque réducteur par un train d'engrenage épicycloïdal. Ce type de train est généralement plus compact qu'une série de trains d'engrenages droits pour de grands rapports de réduction.

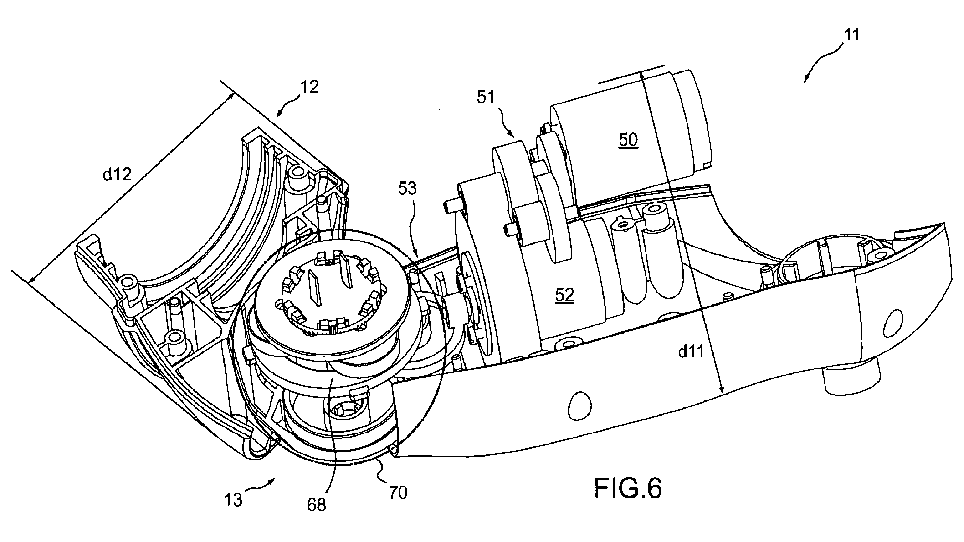

La figure 6 représente une variante de l'articulation 13 du second mode de réalisation, assemblée dans son environnement. Les moteurs 50 et 52 ainsi que le réducteur 51 sont disposés à l'intérieur du bras 11. Seul le réducteur 53 apparait entre le capotage du bras 11 et celui du bras 12. Dans cette variante, le réducteur comprend un train épicycloïdal 68 remplaçant la succession de trains d'engrenages droits 63 et 64.

Avantageusement, l'articulation 13 relie deux éléments du robot et les constituants de l'articulation 13 sont inclus dans le volume des éléments et dans un volume sphérique 70 disposé entre les deux éléments et dont le diamètre est inférieur à des dimensions transversales d11 et d12 des deux éléments.

Plus précisément, dans le mode de réalisation de l'invention, le réducteur 53 peut être inscrit dans le volume sphérique 70 situé entre le bras 11 et l'avant bras 12, le diamètre du volume sphérique 70 étant inférieur à des dimensions transversales d11 et d12, respectivement du bras 11 et de l'avant bras 12. Ce volume sphérique 70, très réduit, évite toute proéminence de l'articulation 13 pouvant gêner les mouvements du robot. Le volume sphérique 70 de dimension réduite existe également dans le premier mode de réalisation. Dans la variante représentée figure 6, le train épicycloïdal 68 permet de réduire le volume sphérique 70.

## Revendications

1. Articulation comprenant deux liaisons pivots (16, 17) dont les axes (14, 15) ne sont pas parallèles, un premier moteur (50) entraînant une première (16) des deux liaisons pivots au travers d'un premier réducteur de vitesse (51) à axes parallèles et un second moteur (52) entraînant une seconde (17) des deux liaisons pivots au travers d'un second réducteur de vitesse (53), **caractérisée en ce que** l'axe de rotation du second moteur (52) est parallèle à l'axe de rotation du premier moteur (50) et **en ce que** le second réducteur (53) comprend un renvoi d'angle (62) entre le moteur (52) et la liaison pivot associés par ce réducteur (53).

2. Articulation selon la revendication 1, **caractérisée en ce que** le renvoi d'angle (62) comprend un engrenage face (67).

3. Articulation selon l'une des revendications précédentes, **caractérisée en ce qu'**un des réducteurs (51, 53) comprend un train d'engrenage épicycloïdal.

4. Articulation selon l'une des revendications précédentes, **caractérisée en ce que** les réducteurs (51, 53) sont réversibles.

5. Robot humanoïde **caractérisé en ce qu'**il comprend au moins une articulation (13) selon l'une des revendications précédentes.

6. Robot humanoïde selon la revendication 5, **caractérisé en ce que** l'articulation (13) relie deux éléments du robot et **en ce que** les constituants de l'articulation (13) sont inclus dans le volume des éléments et dans un volume sphérique (70) disposé entre les deux éléments et dont le diamètre est inférieur à des dimensions transversales (d11 et d12) des deux éléments.

## Claims

1. A joint comprising two pivot connections (16, 17), the axes of which (14, 15) are not parallel, a first motor (50) driving a first (16) of the two pivot connections through a first speed limiter (51) with parallel axes and a second motor (52) driving the second (17) of the two pivot connections through a second speed limiter (53), **characterised in that** the axis of rotation of the second motor (52) is parallel to the axis of rotation of the first motor (50) and **in that** the second limiter (53) comprises a bevel gear (62) between the motor (52) and the pivot connection, which are linked by said limiter (53).

2. The joint according to claim 1, **characterised in that** the bevel gear (62) comprises a face gear (67).

3. The joint according to any one of the preceding claims, **characterised in that** one of the limiters (51, 53) comprises a planetary gear train.

4. The joint according to any one of the preceding claims, **characterised in that** the limiters (51, 53) are reversible.

5. A humanoid robot, **characterised in that** it comprises at least one joint (13) according to any one of the preceding claims.

6. The humanoid robot according to claim 5, **characterised in that** the joint (13) connects two elements of the robot and **in that** the components of the joint (13) are included in the volume of the elements and in a spherical volume (70) that is arranged between the two elements and the diameter of which is less than the transverse dimensions (d11 and d12) of the two elements.

## Patentansprüche

1. Gelenk, das zwei Drehverbindungen (16, 17) umfasst, deren Achsen (14, 15) nicht parallel sind, wobei ein erster Motor (50) eine erste (16) der beiden Drehverbindungen durch einen ersten Drehzahlbegrenzer (51) mit parallelen Achsen antreibt und ein zweiter Motor (52) eine zweite (17) der beiden Drehverbindungen durch einen zweiten Drehzahlbegrenzer (53) antreibt, **dadurch gekennzeichnet, dass** die Drehachse des zweiten Motors (52) parallel zur Drehachse des ersten Motors (50) ist, und **dadurch**, dass der zweite Drehzahlbegrenzer (53) ein Kegelradgetriebe (62) zwischen dem Motor (52) und der Drehverbindung umfasst, die durch den Drehzahlbegrenzer (53) verbunden sind.

2. Gelenk nach Anspruch 1, **dadurch gekennzeichnet, dass** das Kegelradgetriebe (62) ein Kronrad (67) umfasst.

3. Gelenk nach einem der vorherigen Ansprüche, **dadurch gekennzeichnet, dass** einer der Drehzahlbegrenzer (51, 53) ein Planetenradgetriebe umfasst.

4. Gelenk nach einem der vorherigen Ansprüche, **dadurch gekennzeichnet, dass** die Drehzahlbegrenzer (51, 53) reversibel sind.

5. Humanoider Roboter, **dadurch gekennzeichnet, dass** er wenigstens ein Gelenk (13) nach einem der vorherigen Ansprüche umfasst.

6. Humanoider Roboter nach Anspruch 5, **dadurch gekennzeichnet, dass** das Gelenk (13) zwei Elemente des Roboters verbindet, und **dadurch**, dass die Komponenten des Gelenks (13) im Volumen der Elemente und in einem sphärischen Volumen (70) enthalten sind, das zwischen den beiden Elementen angeordnet ist und dessen Durchmesser geringer ist als die Querabmessungen (d11 und d12) der beiden Elemente.
